# EUROPÄISCHE PATENTSCHRIFT

(11) **EP 2 551 606 B1**
(45) Veröffentlichungstag und Bekanntmachung des Hinweises auf die Patenterteilung: **30.03.2016**
(21) Anmeldenummer: 12005442.4
(22) Anmeldetag: 26.07.2012
(51) Int. Cl.: A47J 27/21, F24H 1/18, F24H 1/20, F24D 19/00, F24H 9/20

(54) **Heisswassergerät und Verfahren zum Betreiben eines Heisswassergeräts**
Hot water device and method for operating a hot water device
Chauffe-eau et procédé de fonctionnement d'un chauffe-eau

(30) Priorität: 29.07.2011 EP 11006273
(43) Veröffentlichungstag der Anmeldung: 30.01.2013
(73) Patentinhaber: Stiebel Eltron GmbH & Co. KG, 37603 Holzminden (DE)
(72) Erfinder: Hoffmann, Fred, 34260 Kaufungen (DE)

(56) Entgegenhaltungen:
- WO-A1-2008/124865
- DE-A1- 19 510 733
- DE-A1-102005 062 660
- DE-C1- 3 836 877
- GB-A- 2 215 018
- US-A- 6 094 524

## Beschreibung

Die vorliegende Erfindung betrifft ein Heißwassergerät und ein Verfahren zum Betreiben eines Heißwassergeräts.

Heißwassergeräte, mit denen Wasser mit einer Temperatur von bis zu 85°C bereitgestellt wird, sind aus dem Stand der Technik bekannt und werden in Büros, Haushalten und Kleingewerben eingesetzt. Ebenso sind Kochendwassergeräte, wie beispielsweise Wasserkocher, bekannt, die tatsächlich kochendes Wasser mit einer Temperatur von ca. 100°C liefern.

Die WO 2008/124865 A1 beschreibt ein Verfahren zur Kalibrierung des Wassererhitzers, bei dem zunächst Wasser auf eine erste Temperatur erhitzt wird. Diese erste Temperatur wird für eine vorgegebene Zeit gehalten. Sodann wird wird das Wasser weiter erwärmt, bis die Temperaturänderungsrate einen vorgegebenen Wert unterschreitet. Diese Temperatur wird ebenfalls für eine vorgegebene Zeit gehalten. Schließlich wird das Wasser so lange erwärmt, bis die Temperaturänderung einen vorgegebenen Wert erreicht.

Insbesondere die Heißwassergeräte dienen dazu, permanent Heißwasser mit einer Temperatur möglichst im Bereich des Siedepunktes zur Verfügung zu stellen. Diese Heißwassergeräte bzw. Kochendwassergeräte können in druckloser oder druckfester Ausführung vorgesehen sein. Bei einer druckfesten Ausführung wird typischerweise ein vakuumisolierter Edelstahlbehälter vorgesehen, in dem das Wasser auf 110° C aufgeheizt wird und mit einer Hysterese im Stand-By-Betrieb aufrecht gehalten wird. Über eine druckfeste Armatur wird das 110° C heiße Wasser dem Speicher entnommen und entspannt sich in dem Armaturenauslauf auf typischerweise 100° C. Bei den drucklosen, offenen Heißwassergeräten ist der Heißwasserauslauf offen, insbesondere ventilfrei ausgestaltet, zur Beaufschlagung von Heißwasser mit einem atmosphärischen Luftdruck. Am Heißwasserauslauf liegt ein atmosphärischer Luftdruck an, nicht jedoch ein Fließdruck, vorzugsweise zumindest dann, wenn der Kaltwassereinlauf geschlossen ist.

Die Merkmale des Oberbegriffs von Anspruch 1 sind aus Dokument GB 2 215 018 A bekannt.

Da ein atmosphärischer Luftdruck anliegt, ist der Siedepunkt des Wassers abhängig vom Luftdruck an dem Aufstellungsort. Zur Vermeidung eines Auskochens des Heißwassergerätes (ein Aufheizen des Heißwassergerätes, bis das gesamte sich im Behälter befindliche Wasser verdampft ist oder bis ein Sicherheitstemperaturbegrenzer anspricht) wird eine maximale Wassertemperatur in dem Speicher festgelegt. Diese maximale Speichertemperatur liegt dabei teilweise deutlich unterhalb des Siedepunktes und wird manuell eingestellt oder werkseitig fest eingestellt, beispielsweise auf 92°C, um zu erreichen, dass die voreingestellte Temperatur sicherheitshalber auch dann unter dem Siedepunkt liegt, wenn das Wasser bereits bei einer relativ niedrigen Temperatur anfängt zu sieden.

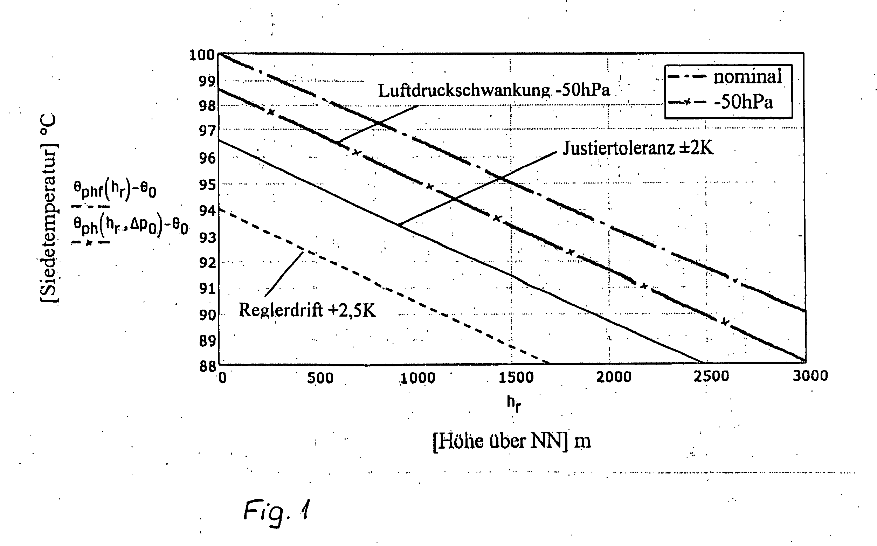

Fig. 1 zeigt einen Graphen zur Veranschaulichung der Abhängigkeit der Siedetemperatur zu der geodätischen Höhe und den Systemtoleranzen der Regelung des Heißwassergerätes. Auf Meereshöhe siedet das Wasser bei 100° C, und in einer Höhe von 1000 m siedet das Wasser bereits bei einer Temperatur von 96,7° C. Ferner können Luftdruckschwankungen bei extremen Wetterlagen zur Änderung der Siedetemperatur bzw. des Siedepunktes beitragen. Diese Abhängigkeit der Siedetemperatur von dem Luftdruck muss bei der Regelung des Heißwassergerätes berücksichtigt werden. Ferner sollten bei der Regelung des Heißwassergerätes zur Aufrechterhaltung der Heißwassertemperatur ebenfalls Justiertoleranzen bei der maximalen Ausschalttemperatur und eine Reglerdrift durch Verschleißen von Bauteilen berücksichtigt werden.

Es ist eine Aufgabe der vorliegenden Erfindung, ein kostengünstiges Heißwassergerät bzw. ein Verfahren zum Betreiben eines Heißwassergerätes vorzusehen, welches einen komfortablen Einsatz und eine energiesparende Betriebsweise, insbesondere durch eine verbesserte Siedepunkterfassung und eine verbesserte Regelung des Heißwassergerätes, ermöglicht.

Diese Aufgabe wird durch ein Heißwassergerät gemäß Anspruch 1 sowie durch ein Verfahren zum Betreiben eines Heißwassergerätes gemäß Anspruch 17 gelöst.

Das Heißwassergerät weist einen Speicherbehälter mit einem Kaltwassereinlauf und einem Heißwasserauslauf, einen Aufnahmeraum für Ausdehnungswasser, eine Heizeinheit zum Aufheizen des sich in dem Speicherbehälter befindlichen Wassers und einen elektronischen Regler zum Regeln des Betriebs der Heizeinheit auf. Der Heißwasserauslauf ist offen und ventilfrei ausgestaltet zur Beaufschlagung von Heißwasser mit einem atmosphärischen Luftdruck für eine Bereitstellung von nahezu kochendem Heißwasser mit einer Temperatur von mindestens ca. 90°C. Der elektronische Regler weist eine Aufheizgradienten-Einheit auf, die dazu ausgestaltet ist einen Aufheizgradienten des sich in dem Speicher befindlichen Wassers zu bestimmen und einen tatsächlichen Siedepunkt des sich in dem Speicher befindlichen Wassers basierend auf einer Steigung des Aufheizgradienten zu bestimmen. Dabei erfolgt eine Siedepunkterfassung, während der sich die elektronische Regelung selbst kalibriert.

Während dieser Siedepunkterfassung wird das sich in dem Wasserspeicherbehälter befindliche Wasser aufgeheizt. Hierbei erfolgt eine Auswertung der Steigerung des Aufheizgradienten. Ist das Wasser im Behälter aufgeheizt, wird anhand des Aufheizgradienten ermittelt, ob ein weiteres Heizen der Heizeinheit noch zu einer Erhöhung der Temperatur führt. Wenn dies nicht der Fall ist, wird dieser Punkt als Siedetemperatur erfasst.

Die maximale Temperatur orientiert sich dabei ausschließlich am Siedepunkt und ist somit unabhängig von Bauteiltoleranzen.

Erfindungsgemäß liegt am Heißwasserauslauf ein atmosphärischer Druck an, nicht jedoch ein Fließdruck, vorzugsweise zumindest dann, wenn der Kaltwassereinlauf geschlossen ist.

Mit dem Heißwassergerät wird nahezu kochendes Wasser bereit gestellt, was bedeutet, dass das Wasser eine Temperatur zwischen ca. 90°C und einer Kochpunkttemperatur aufweist. Insbesondere weist das Wasser eine Temperatur von ca. 95°C. 96°C, 97°C, 98°C oder 99°C auf. Gemäß einem vorteilhaften Ausführungsbeispiel ist die Temperatur abhängig vom atmosphärischen Druck.

Die Siedepunkterfassung erfolgt vorzugsweise im Wege eines Auskochvorgangs, der vorzugsweise bis zu ca. 5 Minuten, insbesondere ca. 2 Minuten, insbesondere ca. 30-60 Sekunden andauert.

Gemäß einem Aspekt der vorliegenden Erfindung ist die Aufheizgradienten-Einheit dazu ausgestaltet, den Siedepunkt zyklisch zu bestimmen.

Gemäß einem weiteren Ausführungsbeispiel erfolgt die Bestimmung des Siedepunktes einmalig nach der Installation des Heißwassergerätes.

Gemäß einem weiteren Aspekt der Erfindung wird der Siedepunkt nach einer Stromunterbrechung, insbesondere nach einem Stromausfall oder nach dem Verbringen des Gerätes an einen anderen Aufstellungsort, bestimmt.

Erfindungsgemäß weist der elektronische Regler einen Schutzeinheit auf, welche anhand der Steigung des Aufheizgradienten einen Fehlerfall ermittelt und die Heizeinheit deaktiviert. Vorzugsweise kann der elektronische Regler in der Aufheizgradienten-Einheit den Temperaturgradienten erfassen und bestimmen, ob eine normale Aufheizung oder ein Störfall vorhanden ist. Ein Störfall ist dann vorhanden, wenn die Temperatur zu schnell ansteigt. Die Schutzschaltung der elektronischen Regelung kann dann das Heißwassergerät schnell abschalten, um eine Beschädigung des Gerätes zu vermeiden.

Erfindungsgemäß weist der elektronische Regler eine Temperaturbegrenzungseinheit auf, welche zum Einstellen einer maximalen Wassertemperatur dient, wobei die maximale Wassertemperatur unterhalb der ermittelten Siedetemperatur des sich in dem Speicher befindlichen Wassers liegt.

Nach Beendigung der Siedepunkterfassung kühlt sich das Wasser ab. Der Regler wird aktiviert, wenn ein unterer Grenzwert erreicht wird, und der Heizkörper wird ebenfalls aktiviert, um das Wasser weiter aufzuheizen. Sodann wird das Wasser bis zur oberen Abschalttemperatur bzw. dem oberen Grenzwert aufgeheizt. Anschließend erfolgt wiederum eine Abkühlphase, und das Wasser kühlt bis zum unteren Einschaltpunkt ab. Vorzugsweise weist das Heißwassergerät eine LED-Einheit zur Anzeige verschiedener Betriebszustände auf.

In einem Ausführungsbeispiel blinkt die LED-Einheit beim Aufheizen. Wenn die Solltemperatur erreicht ist, dann kann die LED-Einheit dauerhaft leuchten.

In einer weiteren vorteilhaften Ausgestaltung der Erfindung leuchtet die LED-Einheit während des Aufheizens dauerhaft und blinkt, wenn die Solltemperatur erreicht ist. Dieser Anzeigemodus ist besonders stromsparend.

Vorzugsweise flackert die LED-Einheit beim Vorliegen eines Fehlerfalls.

Ein Heißwassergerät mit einem drucklosen Speicherbehälter, einer Heizeinheit und einem elektronischen Regler zum Steuern der Heizeinheit ist vorgesehen. Der Regler weist eine erste Betriebsart zur Heißwasserbereitung auf, wobei die maximale Betriebstemperatur in dem drucklosen Speicherbehälter auf Basis einer automatischen Siedepunkterfassung durch die Auswertung eines Temperaturanstieges ermöglicht wird. Die automatische Siedepunkterfassung kann zyklisch wiederholt werden, oder einmalig nach der Installation des Gerätes, nach dem Erkennen eines Auskochens oder nach einer Stromunterbrechung erfolgen. Nach einem Stromausfall kann der Siedepunkt neu ermittelt werden. Ferner sieht der Regler eine Aufheiztemperatur-Gradientenerfassung zur Sicherheitsabschaltung bei einem unsachgemäßen Betrieb, d. h. ohne Wasser, vor. Die Sicherheitsabschaltung kann solange aktiv bleiben, bis das Wasser in dem Speicher auf beispielsweise 35° C abgekühlt ist. Zusätzlich oder alternativ dazu kann die Sicherheitsabschaltung solange aktiv bleiben, bis der Netzstecker gezogen wird und das Gerät somit spannungsfrei geschaltet wird. Optional kann das Heißwasserendgerät eine optische Betriebsmodi-Anzeige aufweisen.

Ein Heißwassergerät mit einem drucklosen Wasserspeicher, einer Heizeinheit und einem elektronischen Regler ist vorgesehen, der eine automatische Siedepunkterkennung ermöglicht. Mittels der Siedepunkterkennung kann sich der elektronische Regler selbst kalibrieren. Diese Kalibrierung bzw. Siedepunkterfassung kann zyklisch wiederholt werden. Zusätzlich dazu kann die Siedepunkterkennung auch nach einer Stromunterbrechung erfolgen. Hierdurch kann ein Auskochen des Heißwassergerätes vermieden werden, wenn das Gerät beispielsweise an einem anderen Ort mit einem geringeren Luftdruck aufgestellt wird.

Zur Vermeidung eines Auskochens liegt die maximale Aufheiztemperatur unterhalb der Siedetemperatur. Beispielsweise kann die maximale Aufheiztemperatur des Wassers 2° C unterhalb der ermittelten Siedetemperatur vorgesehen sein.

Optional kann das Heißwassergerät bzw. der Regler des Heißwassergerätes deaktiviert werden, bis die Temperatur des Wassers in dem Heißwassergerät auf eine Temperatur unterhalb von 35° C fällt. Vorzugsweise ist eine Frostschutzstellung vorgesehen, die ein Absinken der Temperatur auf unter ca. 7°C verhindert. Optional kann vorgesehen sein, dass das Gerät durch Ziehen des Netzsteckers spannungsfrei geschaltet wird, bevor eine erneute Aufheizung erfolgen kann.

Gegenüber dem Stand der Technik hat die Erfindung den Vorteil, dass die Zapftemperatur möglichst nahe am Siedepunkt liegt, ohne dass die Gefahr besteht, dass der Behälter auskocht. Es ist daher nicht erforderlich, die Temperatur des Wassers sicherheitshalber deutlich unter dem Siedepunkt zu halten. Im Gegensatz zum Stand der Technik ist erfindungsgemäß Wasser bereit gestellt, das nahezu kocht, unabhängig davon, wo das Gerät aufgestellt ist und welche Luftdruckverhältnisse herrschen, was für den Benutzer komfortabel ist. Ist das Gerät beispielsweise auf Meeresspiegelhöhe mit einer üblichen Siedetemperatur von ca. 100°C aufgestellt, so kalibriert sich die Regelung selbst auf eine Temperatur von ca. 98°C; ist das Gerät beispielsweise auf einer geodätischen Höhe von 1000 m aufgestellt, bei der Wasser üblicherweise bei ca. 96,7°C siedet, so kalibriert sich die Regelung selbst auf eine Temperatur von ca. 94,7°C.

Ein weiterer Vorteil der Erfindung ist, dass sich die maximale Temperatur ausschließlich am Siedepunkt des Wassers orientiert. Diese Relativmessung der Siedetemperatur ermöglicht den Einsatz von kostengünstigen elektronischen und elektromechanischen Bauelementen mit größeren Toleranzen, da die Summe der Bauteiltoleranzen keinen Einfluss auf den ermittelten Siedepunkt hat.

In einer bevorzugten Ausgestaltung der Erfindung weist das Heißwassergerät im Bereich eines Einlaufes des Speicherbehälters eine Saugeinheit auf. Diese Saugeinheit dient dazu, den Aufnahmeraum während des Zapfens zu entleeren. Das abgesaugte Wasser wird dem Speicher wieder zugeführt.

Die Saugeinheit weist eine Venturidüse und optional einen parallel dazu ausgestalteten Bypass auf.

Gemäß einer Ausgestaltung der vorliegenden Erfindung ist der Querschnitt des Bypasses kleiner als der Querschnitt einer Treibdüse der Venturidüse.

Gemäß einer weiteren Ausgestaltung der vorliegenden Erfindung weist das Heißwassergerät eine Membraneinheit mit einer Membran auf. Diese Membraneinheit schafft vorzugsweise einen Druckausgleich.

Vorzugsweise bildet die Membran einen Teil einer Behälterwand des Heißwassergerätes. Dieser Teil der Behälterwand ist folglich flexibel und verändert sich bei geringen Drücken. Bereits bei einer geringen Wasserhöhe oberhalb eines Wasseranschlussstutzens verformt sich die Membran so, dass sie Raum im Behälter freigibt. Insbesondere drückt sich die Membran zusammen. Vorzugsweise ist die Membran wie ein Schlauch ausgeformt.

Bei einem Zapfvorgang wird an der Membran eine Druckverminderung erzeugt, insbesondere durch eine im Bereich des strömenden Wassers angeordnete Venturidüse. Dabei wird aus der Umgebung der Membran Wasser abgesaugt. Dadurch dehnt sich die Membran aus. Bei Beendigung des Zapfvorgangs wird die Membran durch den statischen Druck der über der Membran stehenden Wassersäule wieder zusammen gedrückt, mithilfe der Saugeinheit wird das Wasser in den Speicherbehälter zurück gesogen und die Membran dehnt sich sodann wieder aus.

Gemäß einer weiteren vorteilhaften Ausgestaltung der Erfindung weist die Saugeinheit ein Rückflussventil auf, das ein Rücksaugen von heißem Wasser, insbesondere bei einem Unterdruck im Leitungsnetz, verhindert.

Vorzugsweise weist der Speicherbehälter zwei Behälterhälften auf, und vorzugsweise ist ein Stützring im Übergangsbereich zwischen der ersten und der zweiten Behälterhälfte vorgesehen.

Wenn das Wasser innerhalb des Speicherbehälters auf eine Temperatur von mindestens ca. 90°C aufgewärmt wird, so dass es nahezu kocht, wird sich der Behälter ebenfalls ausdehnen und kann die Ausdehnungen auf eine Wärmedämmung weitergeben. Dies kann jedoch zu einer Beschädigung der Wärmedämmung führen. Zur Vermeidung der Beschädigung der Wärmedämmung wird also der Stützring verwendet. Da der Stützring über eine höhere Festigkeit als das Material des Speicherbehälters verfügt, kann der Stützring beispielsweise einen mit Glasfaser dotierten Kunststoff wie beispielsweise Polyamid darstellen. Alternativ dazu kann auch ein Metallring verwendet werden. Gemäß einer weiteren Ausgestaltung der vorliegenden Erfindung ist das Heißwassergerät als ein Untertischgerät ausgestaltet.

Ein Heißwassergerät ist vorgesehen, welches einen Heißwasserspeicher und einen Speicherauslauf aufweist, wobei der Speicherauslauf ventilfrei ausgestaltet ist, so dass Wasser, welches sich im Speicherauslauf und/oder in der Armatur des Heißwassergerätes befindet, nach einem Zapfvorgang wieder zurück in den Heißwasserspeicher fließen kann. Dies ist insbesondere vorteilhaft, weil somit vermieden werden kann, dass sich in dem Speicherauslauf und/oder in der Armatur Wasser befindet, welches nicht die gewünschte Temperatur aufweist. Mit dem erfindungsgemäßen Heißwassergerät kann somit direkt Wasser mit der gewünschten Temperatur gezapft werden. Hierdurch kann Energie eingespart werden, da nicht erst kühleres Wasser ungenutzt abfließen muss, bevor Wasser mit der gewünschten Temperatur bereit steht.

Vorzugsweise ist im Kaltwassereinlauf, insbesondere einer Armatur, ein Kaltwasserventil angeordnet.

Durch Öffnen des Kaltwasserventils strömt Kaltwasser in den Behälter, wodurch nahezu kochendes Wasser aus dem Speicherbehälter gedrückt wird.

Hierbei wird das Wasser mittels eines Heizkörpers erhitzt. Wasser wird dadurch gezapft, dass das Kaltwasserventil geöffnet wird. Dadurch strömt Kaltwasser in den Behälter und vorzugsweise nahezu kochendes Heißwasser wird herausgedrückt. Über einen Temperaturregler wird der Heizkörper eingeschaltet und das sich im Behälter befindliche Wasser soweit erhitzt, bis es nahezu kocht. Vorzugsweise dehnt sich das Wasser hierbei aus, wodurch die Membran zusammen gedrückt wird.

Gemäß einer weiteren Ausgestaltung der vorliegenden Erfindung ist das Heißwassergerät drucklos ausgestaltet. Dies bedeutet, dass der Kaltwassereinlauf mit Hilfe des Kaltwasserventils bereits vor dem Wassereintritt in das Gerät abgestellt werden kann, da sich das Kaltwasserventil vorzugsweise außerhalb des Geräts befindet. Der Heißwasserauslauf ist offen. Damit steht das Heißwassergerät bei Nichtbenutzung nicht unter dem Fließdruck, sondern unter Atmosphärendruck. Das Heißwassergerät kann einen offenen Warmwasserspeicher aufweisen. Der Warmwasserspeicher kann ein Ausgleichsgefäß mit einer Membran aufweisen, um unterschiedliche Füllzustände und unterschiedliche Ausdehnungen des sich in dem Speicher befindlichen Heißwassers ausgleichen zu können.

Der Wasserspeicher des Heißwassergerätes weist vorzugsweise ein Volumen zwischen 1l und 51, inbesondere von 1,5l bis 3l auf.

X Gemäß einer weiteren Ausgestaltung der Erfindung ist am Heißwassergerät eine Armatur vorgesehen. Die Armatur weist ein Kaltwasserventil zur Bereitstellung von nahezu kochendem Wasser durch Öffnen des Kaltwasserventils auf. Die Armatur weist außerdem einen Kaltwasserzulauf, einen Kaltwasserauslauf und einen Heißwasserabgang auf. Durch Öffnen des Kaltwasserventils strömt Kaltwasser durch den Kaltwassereinlauf der Armatur über den Kaltwasserauslauf der Armatur in den Behälter des Heißwassergeräts. Dadurch wird Heißwasser aus dem Heißwasserabgang der Armatur herausgedrückt.

Vorzugsweise ist ein Auslaufpunkt für das nahezu kochende Wasser am höchsten Punkt der Armatur angeordnet. Insbesondere weist die Armatur im Bereich des Heißwasserauslaufs keinen Bogen bzw. keine Abwinkelung nach unten auf. Hierdurch soll das sich in der Armatur befindliche Wasser, das nicht benötigt wird, vollständig zurück gesaugt werden.

Vorzugsweise liegt an dem Behälter ein Fließdruck und an der Armatur ein Netzdruck an.

In einer weiteren Ausgestaltung der Erfindung ist die Armatur so ausgestaltet, dass dem auslaufenden nahezu kochenden Wasser Kaltwasser beimischbar ist.

In einem weiteren Ausführungsbeispiel ist in dem Aufnahmeraum zum Behälter eine Öffnung zum Ableiten von Gasblasen vorgesehen. Das Wasser im Aufnahmeraum entgast beim Erwärmen des Wassers. Die Öffnung verhindert, dass sich aufsteigende Gasblasen im Aufnahmeraum sammeln und das gespeicherte Ausdehnungswasser mit zunehmendem Gaspolster zurück in den Speicher drücken. Dadurch ist ein Tropfen einer Armatur am Heißwasserauslauf verhindert. Gasblasen werden durch die Öffnung in den Speicherbehälter und von dort nach außen abgeleitet.

Gemäß einer weiteren Ausgestaltung der Erfindung ist im Bereich der Öffnung eine Entlüftungseinheit vorgesehen. Die Entlüftungseinheit dient dazu, Gasblasen aus dem Ausdehnungsraum in den Speicherbehälter auszuleiten.

Die Entlüftungseinheit ist vorzugsweise in einer Tasche angeordnet. Die Öffnung kann dabei in einem obersten Bereich der Tasche angeordnet sein. In diese Tasche kann die Entlüftungseinheit eingesteckt und mit einem Rasthaken in ihrer Lage gesichert werden.

Die Entlüftungseinheit ist vorzugsweise zweiteilig ausgeführt und weist eine Dichtung, vorzugsweise aus Silikon auf. Gegenüber der Tasche ist die Entlüftungseinheit mittels einer Dichtung abgedichtet, die in eine Aufnahme eingelegt ist.

Gemäß einer bevorzugten Ausgestaltung der Erfindung ist als Ventil eine schwimmende Kugel vorgesehen. Diese Kugel ist mittels eines Halters so in ihrer Position gehalten, dass sie seitlich nicht verrutscht und sich lediglich in senkrechter Richtung bewegt. Die Kugel stellt sicher, dass Gasblasen in den Behälter abgeleitet werden, aber beim Zapfen kein Speicherwasser durch die Öffnung in den Aufnahmeraum gedrückt wird.

Gemäß einer weiteren Ausgestaltung der Erfindung ist eine Kalkschutzkartusche vorgesehen, die im unteren Bereich des Speicherbehälters angeordnet ist, wobei die Kalkschutzkartusche einen Behälter zur Aufnahme von Katalysatorgranulat und einen entsprechenden Deckel aufweist, wobei der Behälter und der Deckel jeweils als Sieb ausgestaltet sind. Das Sieb weist dabei eine Schlitzbreite von vorzugsweise 0,3 mm auf. Das Volumen der Kalkschutzkartusche beträgt vorzugsweise 200 ml.

Die mit Katalysatorgranulat gefüllte Kalkschutzkartusche wird vorzugsweise auf dem Boden des Speicherbehälters konzentrisch zu einem Heizkörper angeordnet. Der Behälter und der Deckel der Kalkschutzkartusche können verschweißt werden. Durch die Ausgestaltung der Kartusche als Sieb wird das Granulat vom einströmenden Kaltwasser und von der Konvektionsströmung während des Aufheizens umspült.

Eine weitere Ausgestaltung der Erfindung ein Heißwassergerät mit einem Speicherbehälter, wobei der Speicherbehälter zwei Behälterhälften aufweist. Das Heißwassergerät weist weiterhin einen Stützring auf, der im Übergangsbereich zwischen der ersten und der zweiten Behälterhälfte vorgesehen ist.

In einem Verfahren zum Betreiben eines Heißwassergeräts mit einem Speicherbehälter (140) für Heißwasser, mit einem Kaltwassereinlauf (110), einem Heißwasserauslauf (170), einer Heizeinheit zum Aufheizen des sich in dem Speicherbehälter (140) befindlichen Wassers und einem elektronischen Regler zum Regeln des Betriebs der Heizeinheit wird zunächst ein Aufheizgradient des sich in dem Speicher befindlichen Wassers bestimmt. Sodann wird der tatsächliche Siedepunkt des sich in dem Speicher befindlichen Wassers basierend auf einer Steigung des Aufheizgradienten bestimmt und sodann die Heizeinheit in Abhängigkeit des tatsächlichen Siedepunktes des sich in dem Speicher befindlichen Wassers geregelt.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt einen Graphen zur Veranschaulichung der Abhängigkeit der Siedetemperatur von der geodätischen Höhe und von Systemtoleranzen,
- Fig. 2: zeigt ein Blockschaltbild eines elektronischen Reglers eines Heißwassergerätes gemäß einem ersten Ausführungsbeispiel,
- Fig. 3: zeigt eine Bedienblende eines Heißwassergerätes gemäß einem zweiten Ausführungsbeispiel,
- Fig. 4: zeigt einen Graphen zur Veranschaulichung eines Verlaufs einer Siedepunkterkennung bei einem Heißwassergerät gemäß einem dritten Ausführungsbeispiel, und
- Fig. 5: zeigt einen Graphen zur Veranschaulichung eines Temperaturverlaufes bei einem Auskochen eines Heißwassergerätes.
- Fig. 6: zeigt eine schematische Darstellung eines Heißwassergerätes gemäß einem ersten Ausführungsbeispiel,
- Fig. 7: zeigt eine schematische Schnittansicht einer Wasserstrahlpumpe in dem Heißwassergerät gemäß dem ersten Ausführungsbeispiel,
- Fig. 8: zeigt eine perspektivische Ansicht auf die Wasserstrahlpumpe von Fig. 7,
- Fig. 9: zeigt eine perspektivische Ansicht einer Wasserstrahlpumpe, und
- Fig. 10: zeigt eine perspektivische Ansicht eines Speicherbehälters für ein Heißwassergerät.
- Fig. 11a: zeigt eine perspektivische Ansicht einer Kalkschutzkartusche.
- Fig. 11b: zeigt eine Teilschnittansicht des unteren Bereichs eines Speicherbehätters.
- Fig. 12: zeigt eine perspektivische Schnittansicht eines Heißwassergerätes gemäß einem weiteren Ausführungsbeispiel
- Fig. 13a: zeigt eine Membraneinheit mit einer Entlüftungseinheit.
- Fig. 13b: zeigt eine Detailansicht der Entlüftungseinheit aus Fig. 13a
- Fig. 14: beschreibt eine Saugeinheit.

Fig. 1 zeigt einen Graphen zur Veranschaulichung der Abhängigkeit der Siedetemperatur von der geodätischen Höhe und von Systemtoleranzen.

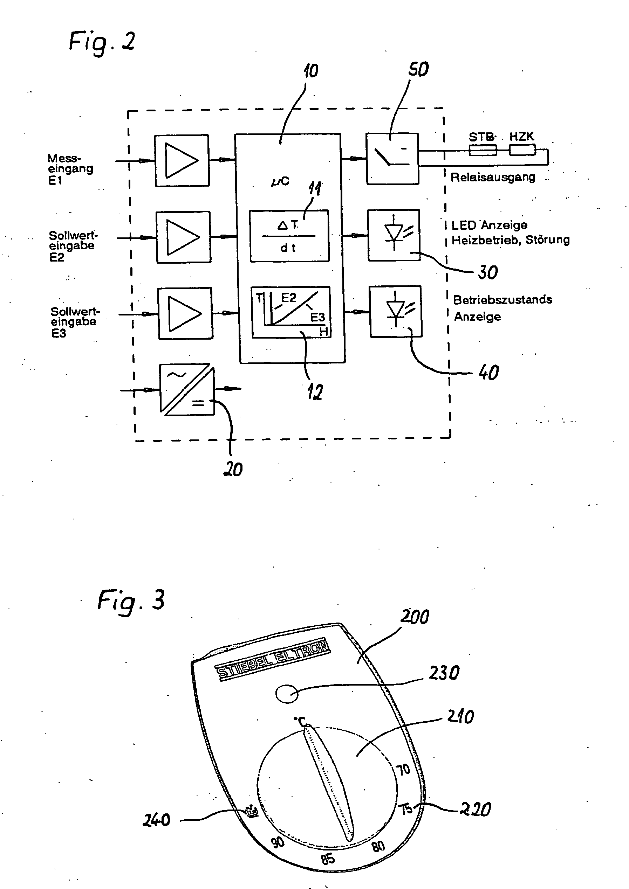

Fig. 2 zeigt ein Blockschaltbild eines elektronischen Reglers eines Heißwassergerätes gemäß einem ersten Ausführungsbeispiel. Der elektronische Regler gemäß dem ersten Ausführungsbeispiel weist einen Mikrocontroller 10, einen Messeingang E1, einen ersten Sollwerteingang E2, einen zweiten Sollwerteingang E3, ein Netzteil 20, eine LED-Anzeige 30, eine Betriebszustandsanzeige 40 und einen Schalter 50 auf. An dem Schalter 50 ist ein STB und eine HZK vorgesehen. In dem Mikrocontroller 10 ist eine Aufheizgradienten-Einheit 11 vorgesehen, welche eine Änderung der Temperatur über die Zeit, d. h. den Aufheizgradienten, erfasst. Der Mikrocontroller 10 weist ferner eine Temperaturbegrenzungseinheit 12 auf. Die erste Sollwerteingabe E2 stellt die maximale Wassersolltemperatur, z. B. 2° C unterhalb des Siedepunktes, dar. Die zweite Sollwerteingabe E3 stellt eine Wassersolltemperatur kleiner als die maximale Temperatur, z. B. 70° C bis 90° C, dar. Die LED-Anzeige 30 kann z. B. im Heizbetrieb blinken.

Fig. 3 zeigt eine Bedienblende eines Heißwassergerätes gemäß einem zweiten Ausführungsbeispiel. Das Bedienelement 200 kann einen Drehknopf bzw. einen Reglerknopf 210, eine LED-Anzeigeneinheit 230 und eine Temperaturskala 220 sowie eine Einstellung 240 aufweisen, welche zur Einstellung der maximalen Temperatur dient, wobei der Siedepunkt automatisch ermittelt wird. Somit kann das Heißwassergerät so betrieben werden, dass die Wassertemperatur in dem Heißwassergerät auf einer Temperatur in der Nähe des Siedepunktes gehalten wird.

Optional kann der Knopf 210 über ein Stellelement mit einem Potentiometer oder einem Digitalgeber auf einer Platine des Reglers verbunden sein. Durch Drehen des Reglerknopfes kann die Solltemperatur des Speichers (zwischen 70° C und 90° C) eingestellt werden. Beim Aufheizen leuchtet die LED-Einheit 230. Wenn die Solltemperatur erreicht ist, dann kann die LED-Einheit 230 blinken. Im Fehlerfall flackert die LED-Einheit 230.

Optional kann eine weitere LED-Einheit oder eine akustische Warneinheit vorgesehen sein, welche optische und/oder akustische Warnhinweise dann ausgibt, wenn es zu einem Fehler wie beispielsweise Trockengang oder einem Auskochen gekommen ist.

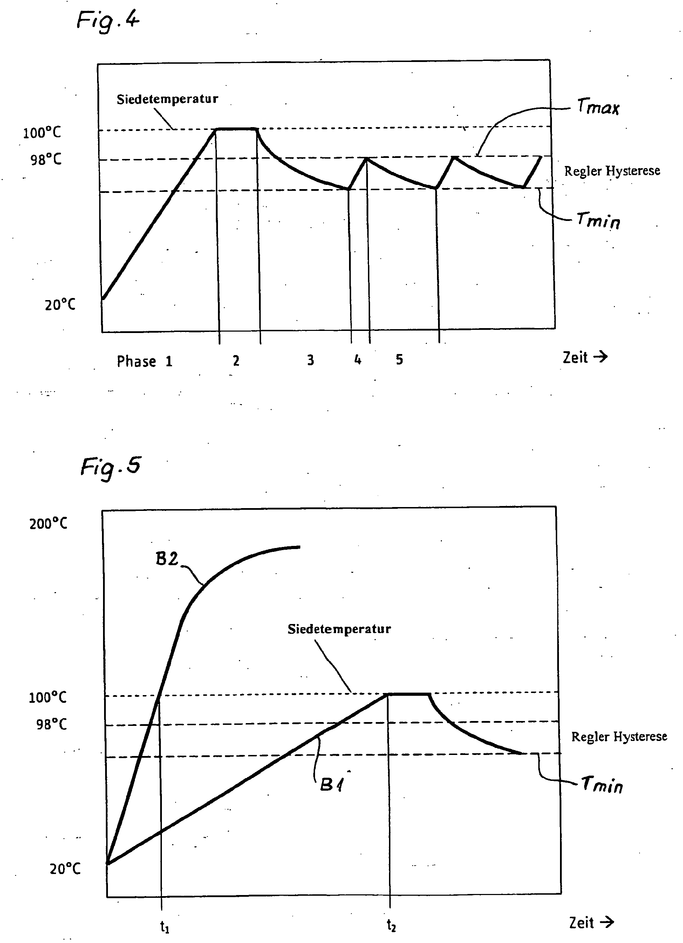

Fig. 4 zeigt einen Graphen zur Veranschaulichung eines Verlaufs einer Siedepunkterkennung bei einem Heißwassergerät gemäß einem dritten Ausführungsbeispiel. In Fig. 4 ist der Temperaturverlauf des Wassers in dem Heißwassergerät über die Zeit bei einer Regelung durch den elektronischen Regler gemäß der Erfindung dargestellt. Insbesondere sind fünf Phasen dargestellt. Die Phase 1 stellt die Aufheizphase bis zum Siedepunkt dar. Während der Phase 1 wird die Heizeinheit durch den elektronischen Regler derart gesteuert, dass die Heizeinheit das sich in dem Speicher befindliche Wasser aufheizt. Somit stellt die Aufheizphase auch diejenige Phase dar, während der der Siedepunkt ermittelt wird. Hierbei erfolgt eine Auswertung der Steigung des Aufheizgradienten dT/dt. Durch Auswertung der Steigung des Aufheizgradienten kann der Siedepunkt exakt bestimmt werden.

Auch in der Phase 2 wird der Aufheizgradient ermittelt. Diese Phase 2 kann beispielsweise 60 Sekunden betragen. Hierbei wird überprüft, ob ein weiteres Heizen der Heizeinheit (gesteuert durch den elektronischen Regler) auch zu einer Erhöhung der Temperatur führt. Wenn dies nicht der Fall ist, dann wird dieser Punkt als Siedepunkt erfasst. Nach Abschluss der Phase 2 ist die Siedepunkterfassung (Kalibrierung) beendet. In der Phase 3 kühlt sich das Wasser ab. Der Regler wird aktiviert, wenn ein unterer Grenzwert Tₘᵢₙ erreicht wird, und der Heizkörper wird ebenfalls aktiviert, um das Wasser weiter aufzuheizen. In der Phase 4 wird das Wasser dann bis zur oberen Abschalttemperatur bzw. dem oberen Grenzwert Tₘₐₓ aufgeheizt. In der Phase 5 erfolgt wiederum eine Abkühlphase, und das Wasser kühlt bis zum unteren Einschaltpunkt ab.

Fig. 5 zeigt einen Graphen zur Veranschaulichung eines Temperaturverlaufes bei einem Auskochen eines Heißwassergerätes. In Fig. 5 ist der Temperaturverlauf über die Zeit gezeigt. Wenn sich ausreichend Wasser in dem Heißwassergerät befindet, dann sinkt die Aufheizkurve B1 wie in Fig. 2 gezeigt. Sollte sich jedoch z. B. nicht ausreichend Wasser in dem Heißwassergerät befinden, dann ist die Aufheizkurve B2 vorhanden und die Steigung des Aufheizgradienten wird wesentlich höher sein, d. h. der Siedepunkt des Wassers wird wesentlich schneller erreicht (t1). Um dies zu vermeiden, weist der elektronische Regler eine Schutzeinheit auf. Der elektronische Regler erfasst in der Aufheizgradienten-Einheit 11 den Temperaturgradienten und bestimmt, ob eine normale Aufheizung oder ein Störfall vorhanden ist. Ein Störfall ist dann vorhanden, wenn die Temperatur zu schnell ansteigt. Die Schutzschaltung der elektronischen Regelung kann dann das Heißwassergerät schnell abschalten, um eine Beschädigung des Gerätes zu vermeiden.

Optional kann das Heißwassergerät bzw. der Regler des Heißwassergerätes deaktiviert werden, bis die Temperatur des Wassers in dem Heißwassergerät auf eine Temperatur unterhalb von 35° C fällt. Vorzugsweise ist eine Frostschutzstellung vorgesehen, die ein Absinken der Temperatur unter ca. 7°C verhindert. Optional kann vorgesehen sein, dass das Gerät durch Ziehen des Netzsteckers spannungsfrei geschaltet wird, bevor eine erneute Aufheizung erfolgen kann.

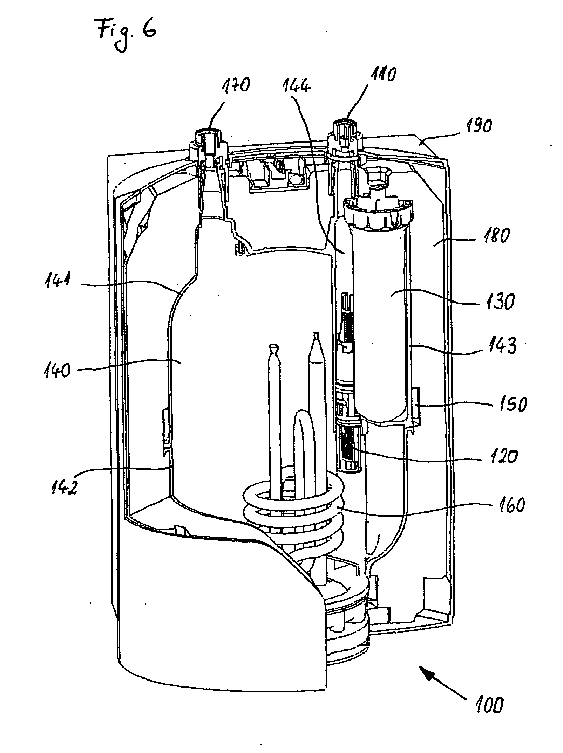

Fig. 6 zeigt eine perspektivische Schnittansicht eines Heißwassergerätes gemäß einem ersten Ausführungsbeispiel. Das Heißwassergerät gemäß dem ersten Ausführungsbeispiel dient dazu, nahezu kochendes Wasser mit einer Temperatur von mindestens ca. 90°C zur Verfügung zu stellen. Das Heißwassergerät 100 weist einen Kaltwassereinlauf 110, eine Saugeinheit 120, eine Membraneinheit 130, einen Speicherbehälter 140, einen Stützring 150 um den Speicherbehälter herum, eine Heizeinheit 160, einen Heißwasserauslauf 170, eine Wärmedämmung 180 und ein Außengehäuse 190 auf. Der Speicherbehälter 140 kann beispielsweise aus einer oberen und unteren Hälfte 141, 142 bestehen. An den Übergangs- bzw. Schweißstellen zwischen dem oberen und unteren Teil des Speicherbehälters 141, 142 ist der Stützring 150 vorgesehen. Der Stützring 150 soll der Stabilisierung und Stützung der Nahtstellen zwischen dem oberen und unteren Teil des Speicherbehälters dienen. Der Speicherbehälter 140 weist in seinem oberen Teil einen Eingangsabschnitt 144 und einen Aufnahmeraum 143 für Ausdehnungswasser auf. Innerhalb des Speicherbehälters 140 ist die Heizeinheit 160 vorgesehen. Im Eingangsabschnitt 144 des Speicherbehälters 140 wird die Saugeinheit 120 vorgesehen, welche eine Venturidüse aufweisen kann.

Die Heizeinheit 160 wird so gesteuert, dass die Temperatur des sich in dem Speicher befindlichen Wassers im Wesentlichen mindestens ca. 90°C beträgt.

Der Aufnahmeraum 130 ist beispielsweise im oder am oberen Behälterteil 141 vorgesehen und dient als Ausgleichsraum für Ausdehnungswasser. Optional kann eine Membraneinheit 130 in den Aufnahmeraum eingeführt werden. Durch das Vorsehen der Membraneinheit 130 mit einer Membran kann sich das Wasser in den Aufnahmeraum 143 drucklos ausdehnen. Die Saugeinheit 120 dient dazu, den Aufnahmeraum 143 zu entleeren.

Das Material des Speicherbehälters 140 ist Kunststoff, beispielsweise Polyamid oder Polypropylen.

Der Speicherbehälter 140 ist über eine Überströmöffnung mit dem Aufnahmeraum 143 verbunden. Die in den Aufnahmeraum 143 eingeführte Membraneinheit 130 kann optional den Speicherbehälter gegenüber der Umgebung luftdicht abschließen. Der Auslauf (Heißwasserauslauf) 170 ist ventilfrei ausgestaltet, d. h. er weist kein Rückflussverhinderungsventil auf. Somit kann Wasser, welches sich in dem Auslauf bzw. der Armatur nach einem Zapfvorgang befindet, wieder in den Speicherbehälter 140 zurückfließen und kann dort erneut auf die gewünschte Temperatur erwärmt werden. Damit kann verhindert werden, dass Wasser mit einer niedrigen Temperatur aus der Armatur des Heißwassergerätes fließt, bevor das nahezu kochende Wasser mit einer Temperatur von mindestens ca. 90°C herausfließt.

Das Heißwassergerät gemäß der Erfindung wird vorzugsweise mit einer drucklosen Zapfarmatur verbunden. Beim Zapfen strömt dann das Heißwasser aus dem Heißwasserauslauf 170. Parallel dazu strömt Wasser durch die Venturidüse der Saugeinheit 120, welche zunächst Wasser aus dem Aufnahmeraum saugen kann, so dass ein Volumen für das Ausdehnungswasser und ggf. rückfließendes Wasser aus der Armatur und dem Heißwasserauslauf 170 vorgesehen werden kann. Die Membran der Membraneinheit 130 wird bei Zapfende aufgrund des statischen Wasserdruckes zusammengedrückt, so dass das sich in der Armatur, der Verbindungsleitung zur Armatur und in dem Heißwasserauslauf befindliche Wasser zurück in den Speicherbehälter fließt.

Zur Verbesserung der Wärmeeffizienz kann eine Wärmedämmung 180 zwischen dem Außengehäuse 190 und dem Speicherbehälter 140 vorgesehen werden.

Ferner ist es vorteilhaft, wenn das sich in der Armatur, der Verbindungsleitung und dem Heißwasserauslauf 170 befindliche Wasser in den Speicherbehälter zurückfließt, damit die Verbindungsleitung leer ist und bei einer Entgasung kein Wasser aus der Verbindungsleitung heraus gedrückt werden kann. Bei einer starken Entgasung beim Aufheizen des Wassers in dem Speicherbehälter kann es zu aufsteigenden Gasblasen kommen, so dass sich in der Verbindungsleitung und der Armatur befindliches stehendes Wasser aus der Armatur gedrückt werden kann.

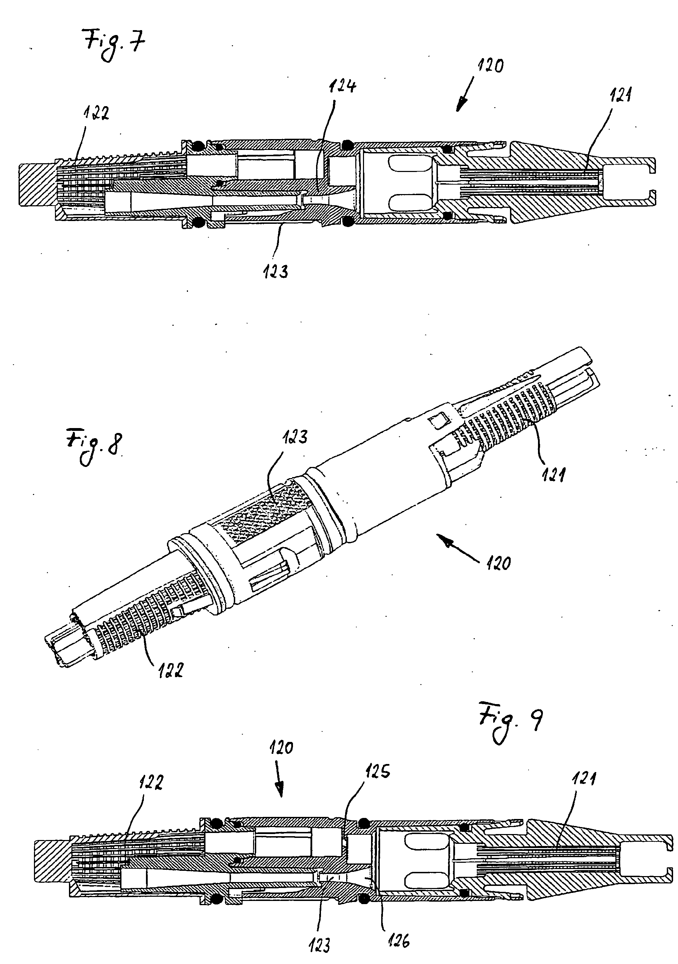

Fig. 7 zeigt eine schematische Schnittansicht einer Wasserstrahlpumpe in dem Heißwassergerät gemäß dem ersten Ausführungsbeispiel. Die Saugeinheit 120 weist einen ersten, zweiten und dritten Schmutzfilter 121, 122, 123 auf. Hierbei wird der erste und zweite Schmutzfilter 121, 122 jeweils an einem ersten und zweiten Ende der Saugeinheit vorgesehen. Ferner weist die Saugeinheit eine Wasserstrahlpumpe bzw. eine Venturidüse 124 auf. Im Bereich der Wasserstrahlpumpe 124 ist der dritte Schmutzfilter 123 vorgesehen. Auf vorteilhafte Art und Weise weist die Saugeinheit 120 keine beweglichen Bauteile auf.

Fig. 8 zeigt eine perspektivische Ansicht auf die Wasserstrahlpumpe von Fig. 3. Die Saugeinheit 120 weist an ihrem ersten Ende einen ersten Schmutzfilter 121 und an ihrem zweiten Ende einen zweiten Schmutzfilter 122 auf. Dazwischen kann ein dritter Schmutzfilter 123 vorgesehen sein.

Fig. 9 zeigt eine perspektivische Ansicht einer Wasserstrahlpumpe gemäß einem zweiten Ausführungsbeispiel. Die Saugeinheit 120 weist an ihrem ersten Ende einen ersten Schmutzfilter 121 und an ihrem zweiten Ende einen zweiten Schmutzfilter 122 auf. Ferner weist die Saugeinheit eine Wasserstrahlpumpe bzw. eine Venturidüse 124 auf. Parallel zu der Venturidüse 124 kann optional ein Bypass 125 vorgesehen sein. Um den Druckverlust durch die Saugeinheit zu reduzieren, kann der Bypass 125 vorgesehen sein. Die Querschnittsfläche der Bypassöffnung 125 ist vorzugsweise kleiner als die Querschnittsfläche der Treibdüse 126 der Wasserstrahlpumpe 124.

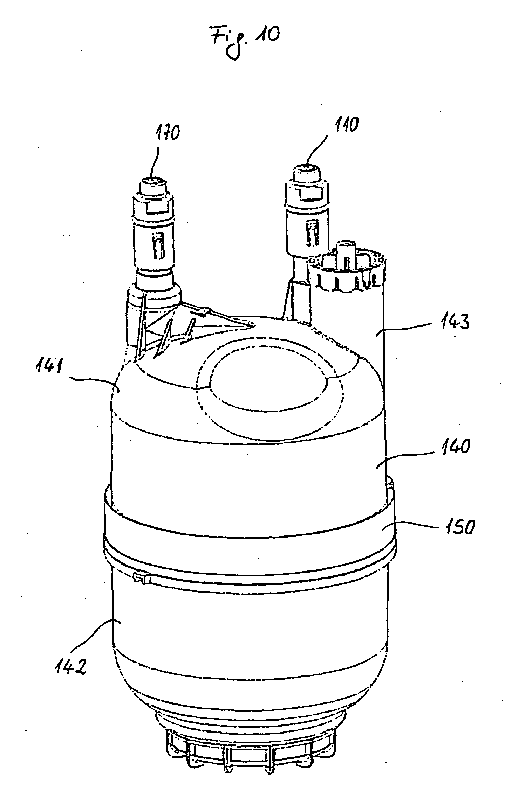

Fig. 10 zeigt eine perspektivische Ansicht eines Speicherbehälters für ein Heißwassergerät gemäß einem dritten Ausführungsbeispiel. Der Speicherbehälter gemäß dem dritten Ausführungsbeispiel kann beispielsweise in dem Heißwassergerät gemäß dem ersten Ausführungsbeispiel verwendet werden. Der Speicherbehälter 140 weist eine obere und eine untere Behälterhälfte 141, 142 auf. Am Übergangsbereich zwischen der oberen und unteren Behälterhälfte 141, 142 kann ein Stützring 150 vorgesehen sein. Der Stützring dient dabei dazu, den Übergangsbereich zwischen der oberen und unteren Behälterhälfte zu stützen. Der Speicherbehälter kann beispielsweise aus Polypropylen hergestellt sein. Wenn das Wasser innerhalb des Speicherbehälters auf eine Temperatur von mindestens ca. 90°C aufgewärmt wird, so dass es nahezu kocht, wird sich der Behälter ebenfalls ausdehnen und kann die Ausdehnungen auf die Wärmedämmung 180 weitergeben. Dies kann jedoch zu einer Beschädigung der Wärmedämmung führen. Zur Vermeidung der Beschädigung der Wärmedämmung wird also der Stützring 150 verwendet. Da der Stützring über eine höhere Festigkeit als das Material des Speicherbehälters verfügen muss, kann der Stützring beispielsweise einen mit Glasfaser gefüllten Kunststoff wie beispielsweise Polyamid darstellen. Alternativ dazu kann auch ein Metallring verwendet werden.

Der Auslauf des Heißwassergerätes ist ventilfrei ausgestaltet, d. h. es ist z. B. kein Rückflussverhinderungsventil im Bereich des Heißwasserauslaufes 170 vorgesehen. Damit kann sichergestellt werden, dass das sich in dem Auslauf befindliche Wasser wieder zurück in den Speicherbehälter fließen kann.

Das Heißwassergerät gemäß der Erfindung kann vorzugsweise als ein Untertisch-Heißwassergerät oder als Untertisch-Kochendwassergerät ausgestaltet sein. Das Heißwassergerät gemäß der Erfindung ist insbesondere zur Tassenzapfung ausgelegt. Die Saugpumpe gemäß der Erfindung ist ebenfalls ventilfrei bzw. rückflussventilfrei ausgestaltet.

Durch das Vorsehen der Membraneinheit 130 in dem Aufnahmeraum 143 wird gewährleistet, dass sich das Wasser innerhalb des Speicherbehälters ausdehnen kann.

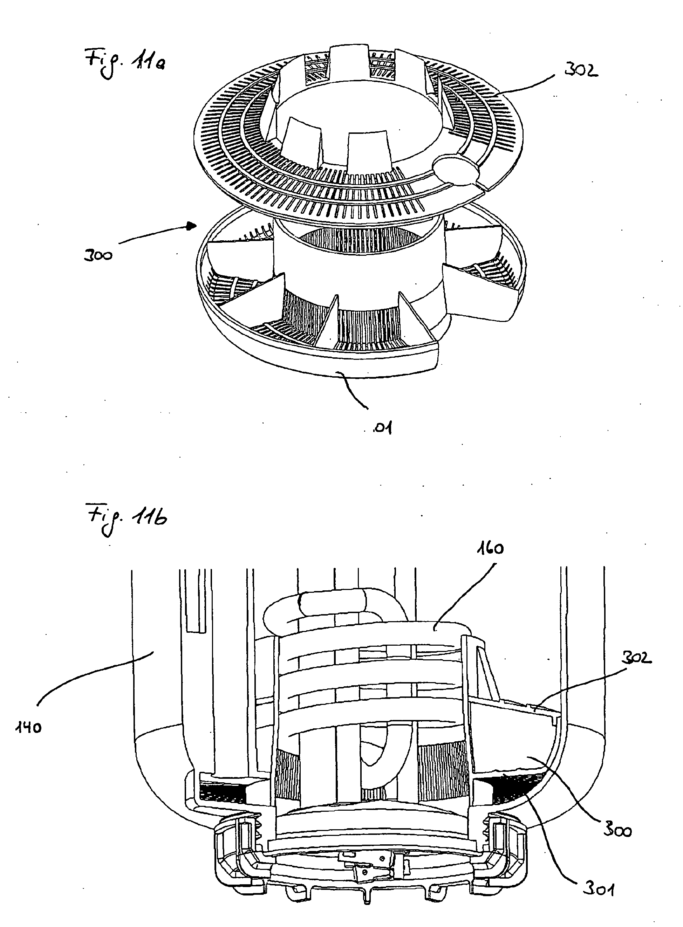

Fig. 11a zeigt eine Kalkschutzkartusche 300 gemäß einem weiteren Ausführungsbeispiel. Hierbei weist die Kalkschutzkartusche 300 einen unteren Behälter 301 sowie einen Deckel 302 auf. Sowohl Deckel 301 als auch Behälter 302 ist als Sieb mit einer Schlitzbreite von vorzugsweise 0,3 mm ausgeführt. Das Volumen der Kalkschutzkartusche beträgt vorzugsweise 200 ml. Die mit Katalysatorgranulat gefüllte Kalkschutzkartusche 300 wird vorzugsweise auf dem Boden des Speicherbehälters 140 konzentrisch zum Heizkörper 160 angeordnet. Der Behälter 301 und der Deckel 302 der Kalkschutzkartusche 300 können verschweißt werden. Durch die Ausgestaltung der Kartusche 300 als Sieb wird das Granulat vom einströmenden Kaltwasser und von der Konvektionsströmung während des Aufheizens wirksam umspült.

Fig. 11b zeigt eine Teilschnittansicht des unteren Bereichs des Speicherbehälters 140 mit einer Kalkschutzkartusche 300 mit einem Behälter 301 und einem Deckel 302.

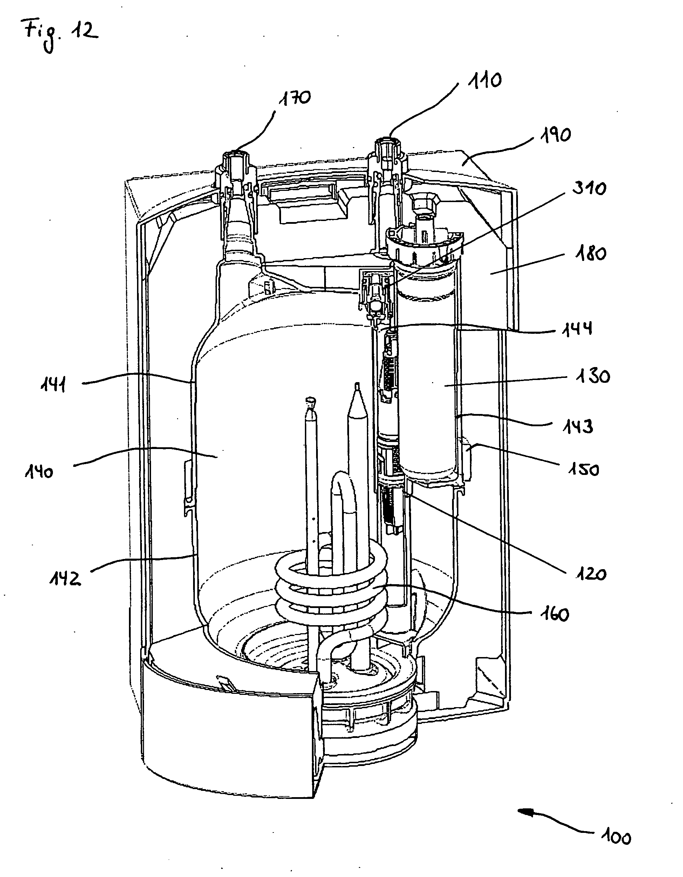

Fig. 12 zeigt eine perspektivische Schnittansicht eines Heißwassergerätes 100 gemäß einem weiteren Ausführungsbeispiel. Das Heißwassergerät 100 weist einen Kaltwassereinlauf 110, eine Saugeinheit 120, eine Membraneinheit 130, einen Speicherbehälter 140, einen Stützring 150 um den Speicherbehälter herum, eine Heizeinheit 160, einen Heißwasserauslauf 170, eine Wärmedämmung 180 und ein Außengehäuse 190 auf. Der Speicherbehälter 140 kann beispielsweise aus einer oberen und unteren Hälfte 141, 142 bestehen. An den Übergangs- bzw. Schweißstellen zwischen dem oberen und unteren Teil des Speicherbehälters 141, 142 ist der Stützring 150 vorgesehen. Weiterhin weist Speicherbehälter 140 einen Eingangsabschnitt 144 und einen Aufnahmeraum 143 für Ausdehnungswasser auf. Zudem weist der Speicherbehälter 140 im Bereich des Aufnahmeraums 143 eine Entlüftungseinheit 310 auf. Die Entlüftungseinheit 310 dient dazu, Gasblasen aus dem Ausdehnungsraum 143 in den Speicherbehälter 140 auszuleiten.

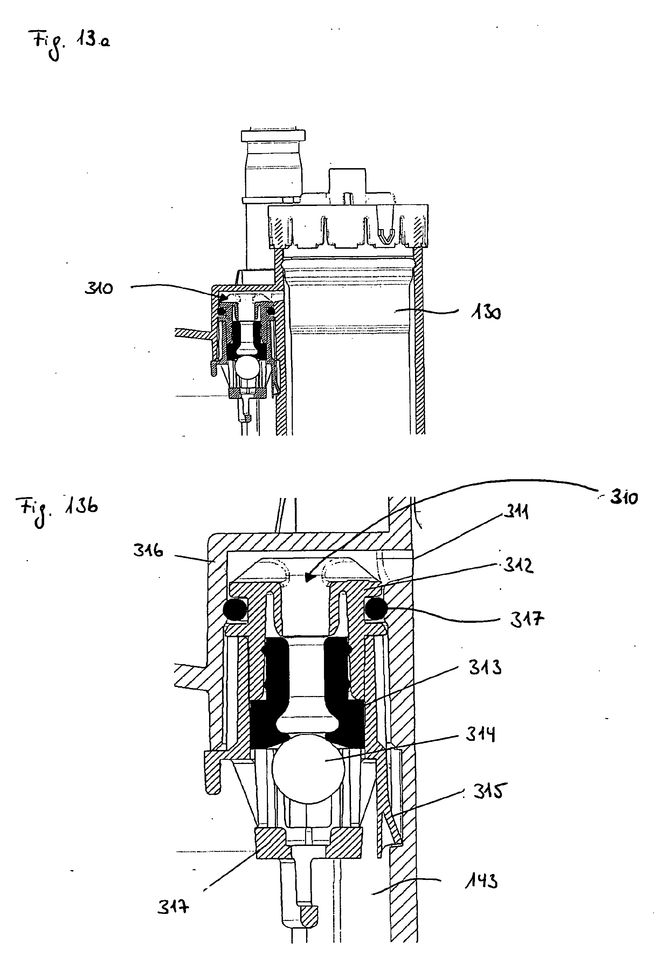

Fig. 13a zeigt eine Membraneinheit 130 mit einer Entlüftungseinheit 310 in einem Ausführungsbeispiel.

Fig. 13b zeigt eine Detailansicht der Entlüftungseinheit 310 aus Fig. 13a. Im Bereich der Entlüftungseinheit 310 ist eine Öffnung 311 zum nicht näher dargestellten Behälter vorgesehen. Diese Öffnung 311 ermöglicht eine Entgasung des Aufnahmeraumes 143. indem Gasblasen aus dem Aufnahmeraum 143 durch die Öffnung 311 in den Behälter abgeleitet werden. Die Entlüftungseinheit ist in einer Tasche 316 angeordnet. Die Öffnung 311 kann in einem obersten Bereich der Tasche 316 angeordnet sein. In diese Tasche 316 kann die Entlüftungseinheit 310 eingesteckt und mit einem Rasthaken 315 in ihrer Lage gesichert werden. Die Entlüftungseinheit 310 ist zweiteilig ausgeführt und weist eine Dichtung 213, vorzugsweise aus Silikon auf. Gegenüber der Tasche 316 ist die Entlüftungseinheit 310 mittels einer Dichtung 317 abgedichtet, die in eine Aufnahme 312 eingelegt ist. Als Ventil ist eine schwimmende Kugel 314 vorgesehen. Diese Kugel 314 ist mittels eines Halters 317 so in ihrer Position gehalten, dass sie seitlich nicht verrutscht und sich lediglich in senkrechter Richtung bewegt. Die Kugel 314 stellt sicher, dass Gasblasen in den Behälter abgeleitet werden, aber beim Zapfen kein Speicherwasser durch die Öffnung 311 in den Aufnahmeraum 143 gedrückt wird.

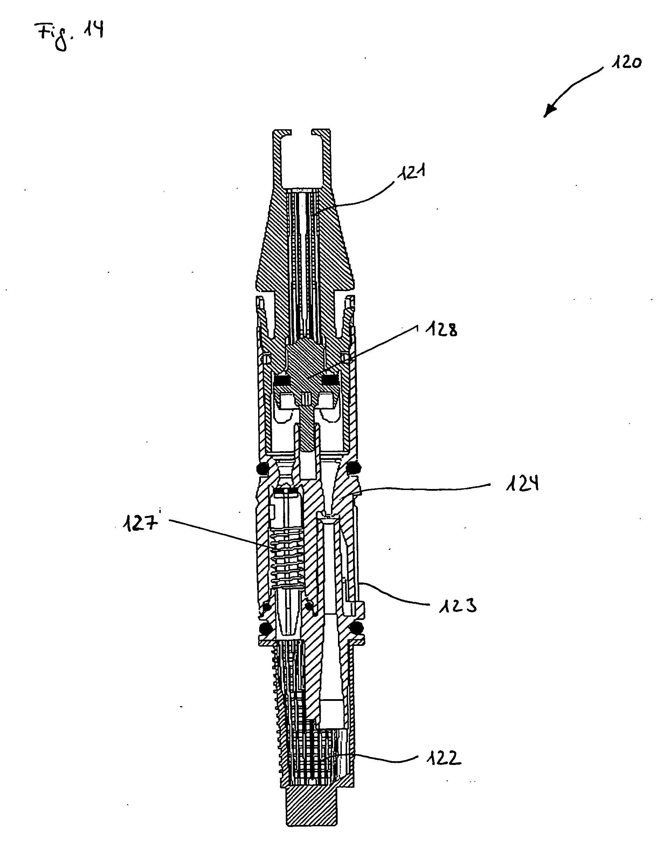

Fig. 14 beschreibt eine Saugeinheit 120 in einem weiteren Ausführungsbeispiel. Die Saugeinheit 120 weist Schmutzfilter 121, 122, 123 auf. Weiterhin ist eine Venturidüse vorgesehen. Die Saugeinheit weist außerdem ein Bypassventil 127 und ein Rückflussventil 128 auf. Das Rückflussventil 128 verhindert ein Rücksaugen von heißem Wasser, beispielsweise bei einem Unterdruck im Leitungsnetz.

## Patentansprüche

1. Heißwassergerät, mit einem Speicherbehälter (140), der einen Kaltwassereinlauf (110), einen Heißwasserauslauf (170), einen Aufnahmeraum (143) für Ausdehnungswasser, eine Heizeinheit zum Aufheizen des sich in dem Speicherbehälter (140) befindlichen Wassers und einen Regler zum Regeln des Betriebs der Heizeinheit aufweist,
wobei der Heißwasserauslauf (170) offen und ventilfrei ausgestaltet ist zur Beaufschlagung von Heißwasser mit einem atmosphärischem Luftdruck für eine Bereitstellung von nahezu kochendem Heißwasser mit einer Temperatur von mindestens ca. 90°C, **dadurch gekennzeichnet, daß** der Regler ein elektronischer Regler ist,
wobei der elektronische Regler eine Aufheizgradienten-Einheit (11) aufweist, die dazu ausgestaltet ist, einen Aufheizgradienten des sich in dem Speicherbehälter (140) befindlichen Wassers zu bestimmen und einen tatsächlichen Siedepunkt des sich in dem Speicherbehälter (140) befindlichen Wassers basierend auf einer Steigung des Aufheizgradienten zu bestimmen,
wobei der elektronische Regler eine Schutzeinheit aufweist, welche anhand der Steigung des Aufheizgradienten einen Fehlerfall ermittelt und die Heizeinheit deaktiviert,
wobei der elektronische Regler eine Temperaturbegrenzungseinheit (12) aufweist, welche zum Einstellen einer maximalen Wassertemperatur dient, wobei die maximale Wassertemperatur unterhalb der ermittelten Siedetemperatur des sich in dem Speicher befindlichen Wassers liegt.

2. Heißwassergerät nach Anspruch 1, wobei
die Aufheizgradienten-Einheit (11) dazu ausgestaltet ist, den Siedepunkt zyklisch oder einmalig nach der Installation und/oder nach einem Auskochen des Behälters und/oder nach einer Stromunterbrechung zu bestimmen.

3. Heißwassergerät nach einem der Ansprüche 1 bis 2,
wobei das nahezu kochende Heißwasser eine Temperatur von ca. 95°C, 96°C, 97°C, 98°C oder 99°C aufweist, insbesondere auf eine solche Temperatur geregelt wird.

4. Heißwassergerät nach Anspruch 1 bis 3, ferner mit
einer Saugeinheit (120) im Bereich eines Einlaufes (144) des Speicherbehälters (140) zum Ansaugen von Ausdehnungswasser aus dem Aufnahmeraum (143), insbesondere mit einer Temperatur von mindestens ca. 90°C,
wobei die Saugeinheit (120) eine Venturidüse (124) und optional einen parallel dazu ausgestalteten Bypass (125) aufweist.

5. Heißwassergerät nach Anspruch 4, wobei
der Querschnitt des Bypasses (125) kleiner ist als der Querschnitt einer Treibdüse (126) der Venturidüse (124).

6. Heißwassergerät nach einem der Ansprüche 1 bis 5, ferner mit
einer Membraneinheit (130) mit einer Membran, welche in dem Aufnahmeraum (143) vorgesehen ist und dazu dient, einen Druckausgleich zu schaffen und den Speicherbehälter (140) nach außen gegen einen Lufteintritt abzudichten.

7. Heißwassergerät nach einem der Ansprüche 1 bis 6, wobei
das Heißwassergerät drucklos ausgestaltet ist.

8. Heißwassergerät nach einem der Ansprüche 1 bis 7, mit
einer Kalkschutzkartusche (300), welche im unteren Bereich des Speicherbehälters (140) angeordnet ist, wobei die Kalkschutzkartusche (300) einen Behälter (301) zur Aufnahme von Katalysatorgranulat und einen entsprechenden Deckel (302) aufweist, wobei der Behälter (301) und der Deckel (302) jeweils als Sieb ausgestaltet sind.

9. Heißwassergerät nach einem der Ansprüche 1 bis 8, wobei
eine Armatur an dem Kaltwassereinlauf (110) und dem Heißwasserauslauf (170) befestigbar ist, wobei ein Kaltwasserventil in einem Kaltwassereinlauf dieser Armatur angeordnet ist zur Bereitstellung von nahezu kochendem Wasser durch Öffnen des Kaltwasserventils.

10. Heißwassergerät nach Anspruch 9, wobei
ein Auslaufpunkt für das nahezu kochende Wasser am höchsten Punkt eines Heißwasserkanals der Armatur angeordnet ist.

11. Heißwassergerät nach Anspruch 9 oder 10, wobei
die Armatur dazu geeignet ist, dem ausströmenden nahezu kochenden Heißwasser Kaltwasser beizumischen.

12. Heißwassergerät nach einem der Ansprüche 1 bis 11, wobei
in dem Aufnahmeraum (143) zum Behälter (140) eine Öffnung (311) zum Ableiten von Gasblasen vorgesehen ist.

13. Heißwassergerät nach Anspruch 12, wobei
im Bereich der Öffnung (211) eine Entlüftungseinheit (210) vorgesehen ist.

14. Heißwassergerät nach Anspruch 13, wobei
die Entlüftungseinheit (210) eine schwimmende Kugel (214) für das Ableiten der Gasblasen aufweist.

15. Heißwassergerät nach einem der Ansprüche 1 bis 14, wobei
der Speicherbehälter (140) zwei Behälterhälften (141, 142) aufweist,
wobei das Heißwassergerät einen Stützring (150) aufweist, der im Übergangsbereich zwischen der ersten und zweiten Behälterhälfte (141. 142) vorgesehen ist

16. Heißwassergerät nach einem der Ansprüche 1 bis 15.
wobei der Speicherbehälter (140) ein Kunststoffspeicherbehälter ist.

17. Verfahren zum Betreiben eines Heißwassergeräts nach einem oder mehreren der
vorhergehenden Ansprüche 1 bis 16, **dadurch gekennzeichnet daß** das verfahren die folgenden Verfahrensschritte enthält:
Bestimmen eines Aufheizgradienten des sich in dem Speicherbehälter (140) befindlichen Wassers,
Bestimmen des tatsächtlichen Siedepunktes des sich dem Speicherbehälter (140) befindlichen Wassers basierend auf einer Steigerung des Aufheizgradienten, Regeln der Heizeinheit in Abhängigkeit des tatsächlichen Siedepunktes des sich in dem Speicherbehälter (140) befindlichen Wassers,
Ermitteln eines Fehlerfalls und Deaktivieren der Heizeinheit anhand der Steigung des Aufheizgradienten, und
Einstellen einer maximalen Wassertemperatur durch eine Temperaturbegrenzungseinheit, wobei die maximale Wassertemperatur unterhalb der ermittelten Siedetemperatur des sich in dem Speicher befindlichen Wassers liegt.

## Claims

1. Hot water unit, with a storage container (140) which indicates a cold water entry (110), a hot water runout (170), a reception space (143) for expansion water, a heating unit for the warming of the water contained in the storage container (140) and a controller for the regulation of the operation of the heating unit,
where the hot water runout is designed open and valve-free (170) for the subjection of hot water to atmospheric air pressure for an appropriation of almost boiling hot water with a temperature of at least approx. 90°C, identified in that, the controller is an electronic controller, the electronic controller indicates a heating gradient unit (11), which is designed for the purpose of determining a heating gradient of the water contained in the storage container (140) and an actual boiling point of the water contained in the storage container (140) based on a gradient of the heating gradient,
where the electronic controller indicates a protection unit which determines a fault case by means of the gradient of the heating gradient and deactivates the heating unit,
where the electronic controller indicates a temperature limitation unit (12) which is used for the adjusting of a maximum water temperature, where the maximum water temperature lies below the determined boiling point of the water contained in the storage.

2. Hot water unit according to Claim 1, where
the heating gradient unit (11) is designed for the purpose of determining the boiling point cyclically or once after the installation and/or after a boiling of the container and/or after an interruption of current.

3. Hot water unit according to one of the Claims 1 to 2,
where the almost boiling hot water indicates a temperature of approx. 95°C, 96°C, 97°C, 98°C or 99°C, in particular is controlled to such a temperature.

4. Hot water unit according to Claim 1 to 3, further with
a suction unit (120) in the area of a feed (144) of the storage container (140) for the suction of expansion water from the reception space (143), in particular with a temperature of at least approx. 90°C,
where the suction unit (120) indicates a Venturi nozzle (124) and optionally a bypass (125) designed in parallel with this.

5. Hot water unit according to Claim 4, where
the cross-section of the bypass (125) is smaller than the cross-section of a propellant nozzle (126) of the Venturi nozzle (124).

6. Hot water unit according to one of the Claims 1 to 5, further with
a diaphragm unit (130) with a membrane which is provided in the reception space (143) and serves to create a pressure compensation and to seal off the storage container (140) externally against any air inlet.

7. Hot water unit according to one of the Claims 1 to 6, where
the hot water unit is designed pressure-free.

8. Hot water unit according to one of the Claims 1 to 7, with
a lime-protection cartridge (300) which is arranged in the lower area of the storage container (140), where the lime-protection cartridge (300) indicates a container (301) for the reception of catalyzer granulate and a corresponding cover (302), where the container (301) and the cover (302) are designed as a screen in each case.

9. Hot water unit according to one of the Claims 1 to 8, where
a valve can be fastened at the cold water entry (110) and the hot water runout (170), where a cold water valve is arranged in a cold water entry of this valve for the appropriation of almost boiling water through opening the cold water valve.

10. Hot water unit according to Claim 9, where
a run-out point for the almost boiling water is arranged at the highest point of a hot water conduit of the valve.

11. Hot water unit according to Claim 9 or 10, where
the valve is suitable for the purpose of adding almost boiling cold water to the outflowing hot water.

12. Hot water unit according to one of the Claims 1 to 11, where
in the reception space (143) to the container (140) an opening (311) is provided for the removal of gas bubbles.

13. Hot water unit according to Claim 12, where
an air extraction unit (210) is provided in the area of the opening (211).

14. Hot water unit according to Claim 13, where
the air extraction unit (210) indicates a floating ball (214) for the removal of the gas bubbles.

15. Hot water unit according to one of the Claims 1 to 14, where
the storage container (140) indicates two container halves (141, 142), where the hot water unit indicates a bearing ring (150) which is provided in the transition region between the first and second container half (141, 142).

16. Hot water unit according to one of the Claims 1 to 15,
where the storage container is a plastic storage container (140).

17. Process for the operation of a hot water unit according to one or more of the preceding Claims 1 to 16 **characterized in that**,
the process includes the following process steps:
Determining a heating gradient of the water contained in the storage container (140),
determining the actual boiling point of the water contained in the storage container (140), based on an increase of the heating gradient,
regulating the heating unit dependent on the actual boiling point of the water contained in the storage container (140),
determining a fault case and deactivation of the heating unit by means of the slope of the heating gradient, and
adjusting a maximum water temperature by means of a temperature limitation unit, where the maximum water temperature lies below the determined boiling point of the water contained in the storage.

## Revendications

1. Dispositif d'eau chaude équipé d'un réservoir de stockage (140) présentant une entrée d'eau froide (110), une sortie d'eau chaude (170), un espace de réception (143) pour l'eau d'expansion, une unité de chauffage destiné à chauffer l'eau se trouvant dans le réservoir de stockage (140) et un régulateur destiné à réguler le fonctionnement de l'unité de chauffage,
la sortie d'eau chaude (170) étant ouverte et sans valve et destinée à la mise en pression d'eau chaude à l'aide d'une pression atmosphérique pour une mise à disposition d'eau chaude quasi bouillante d'une température d'au moins 90°C environ, **caractérisé en ce que**
le régulateur est un régulateur électronique, **en ce que** le régulateur électronique présente une unité à gradient de chauffe (11) destinée à déterminer un gradient de chauffe de l'eau se trouvant dans le réservoir de stockage (140) et à déterminer un point d'ébullition réel de l'eau se trouvant dans le réservoir de stockage (140) en se basant sur une augmentation du gradient de chauffe,
**en ce que** le régulateur électronique présente une unité de protection qui, par l'augmentation du gradient de chauffe, identifie un cas de défaillance et désactive l'unité de chauffage,
**en ce que** le régulateur électronique présente une unité de limitation de la température (12) servant à la configuration d'une température maximale de l'eau, la température maximale de l'eau se situant en-dessous de la température d'ébullition identifiée de l'eau se trouvant dans le réservoir.

2. Dispositif d'eau chaude selon la revendication 1, **caractérisé en ce que**
l'unité à gradient de chauffe (11) est destinée à déterminer de manière cyclique ou unique le point d'ébullition après l'installation et/ou après épuisement du réservoir et/ou après une coupure de courant.

3. Dispositif d'eau chaude selon l'une des revendications 1 à 2,
**caractérisé en ce que** l'eau chaude quasi bouillante présente une température de 95 °C, 96 °C, 97 °C, 98 °C ou 99°C environ, est réglée en particulier à une telle température.

4. Dispositif d'eau chaude selon les revendications 1 à 3, équipé en outre
d'une unité aspirante (120) dans la zone d'une entrée (144) du réservoir de stockage (140) destinée à l'aspiration de l'eau d'aspiration provenant de l'espace de réception (143), en particulier d'une température d'au moins 90°C environ, l'unité aspirante (120) présentant une buse Venturi (124) et en option un bypass (125) disposé parallèlement à cette dernière.

5. Dispositif d'eau chaude selon la revendication 4, **caractérisé en ce que**
la section du bypass (125) est inférieure à la section d'une buse de propulsion (126) de la buse Venturi (124).

6. Dispositif d'eau chaude selon l'une des revendications 1 à 5, équipé en outre d'une unité de membrane (130) pourvue d'une membrane prévue dans l'espace de réception (143) et servant à créer une compensation de pression et à rendre étanche vers l'extérieur le réservoir de stockage (140) contre une entrée d'air.

7. Dispositif d'eau chaude selon l'une des revendications 1 à 6, **caractérisé en ce que** le dispositif d'eau chaude est initialement dépourvu de pression.

8. Dispositif d'eau chaude selon l'une des revendications 1 à 7, comprenant
une cartouche anticalcaire (300) disposée dans la zone inférieure du réservoir de stockage (140), la cartouche anticalcaire (300) présentant un réservoir (301) destiné à accueillir du granulat de catalyseur et un couvercle (302) adapté, le réservoir (301) et le couvercle (302) faisant respectivement office de tamis.

9. Dispositif d'eau chaude selon l'une des revendications 1 à 8, **caractérisé en ce que**
une robinetterie peut être fixée à l'entrée d'eau froide (110) et à la sortie d'eau chaude (170), une soupape d'eau froide étant disposée dans une entrée d'eau froide de cette robinetterie pour la mise à disposition d'eau chaude quasi bouillante lorsque la soupape d'eau froide est ouverte.

10. Dispositif d'eau chaude selon la revendication 9, **caractérisé en ce que**
un point de sortie pour l'eau quasi bouillante est disposé au niveau du point le plus élevé d'un canal d'eau chaude de la robinetterie.

11. Dispositif d'eau chaude selon la revendication 9 ou 10, **caractérisé en ce que** la robinetterie est propre à mélanger de l'eau froide à l'eau chaude quasi bouillante en circulation.

12. Dispositif d'eau chaude selon l'une des revendications 1 à 11, **caractérisé en ce que**
dans l'espace de réception (143) vers le réservoir (140) est prévue une ouverture (311) destinée à l'évacuation des bulles de gaz.

13. Dispositif d'eau chaude selon la revendication 12, **caractérisé en ce que**
dans la zone de l'ouverture (211) est prévue une unité de purge (210).

14. Dispositif d'eau chaude selon la revendication 13, **caractérisé en ce que**
l'unité de purge (210) présente une sphère flottante (214) pour l'évacuation des bulles de gaz.

15. Dispositif d'eau chaude selon l'une des revendications 1 à 14, **caractérisé en ce que**
le réservoir de stockage (140) présente deux moitiés de réservoir (141, 142),
le dispositif d'eau chaude présentant une bague d'appui (150) prévue dans la zone de transition entre la première et la seconde moitié du réservoir (141, 142).

16. Dispositif d'eau chaude selon l'une des revendications 1 à 15,
**caractérisé en ce que** le réservoir de stockage (140) est un réservoir de stockage en plastique.

17. Procédé de fonctionnement d'un dispositif d'eau chaude selon l'une ou plusieurs
des revendications 1 à 16 précédentes, **caractérisé en ce que**,
le procédé comprend les étapes de procédé suivantes :
détermination d'un gradient de chauffe de l'eau se trouvant dans le réservoir de stockage (140),
détermination du point d'ébullition réel de l'eau se trouvant dans le réservoir de stockage (140) en se basant sur une augmentation du gradient de chauffe,
régulation de l'unité de chauffage en fonction du point d'ébullition réel de l'eau se trouvant dans le réservoir de stockage (140),
identification d'un cas de défaillance et désactivation de l'unité de chauffage par l'augmentation du gradient de chauffe, et
configuration d'une température maximale de l'eau par une unité de limitation de la température, la température maximale de l'eau se situant en-dessous de la température d'ébullition identifiée de l'eau se trouvant dans le réservoir.
